# EUROPEAN PATENT SPECIFICATION

(11) **EP 2 490 059 B1**
(45) Date of publication and mention of the grant of the patent: **25.06.2014**
(21) Application number: 11154914.3
(22) Date of filing: 17.02.2011
(51) Int. Cl.: G02B 6/44

(54) **Fibre organizer**
Faserorganisator
Organiseur de fibres

(43) Date of publication of application: 22.08.2012
(73) Proprietor: Tyco Electronics Raychem BVBA, 3010 Kessel-Lo (BE)
(72) Inventor: Schurmans, Eric, 3450, Hogen-Geetbets (BE); Beckers, Erwin, 3012, Wilsele (BE)
(74) Representative: Patentanwaltskanzlei WILHELM & BECK

(56) References cited:
- EP-A1- 2 381 283
- US-A1- 2006 275 008
- US-B1- 6 504 986

## Description

The invention refers to a fibre organizer as described in claim 1 and to a stack of fibre organizers of claim 13.

Fibre organizers with fixing means for fixing splitters and optical fibres are known in various embodiments.

For example WO 2009/106874 A1 describes an optical fibre organiser.

EP 2 381 283 A1 discloses an optical fibre tray assembly with a fibre organizer with fixing means for fixing an optical element and with means for guiding an optical fibre on the organizer. The fibre organizer comprises a plate which comprises an upper bottom face which defines a plane and which provides a lower bottom face at a lower side. The fibre organizer comprises fixing means which are embodied to fix the element into a position in which the element protrudes the plane of the upper bottom face of the organizer.

US 2006/275008 A1 discloses a fibre management apparatus including a module for managing fibres. The fibre management apparatus comprises several trays arranged onto each other. An upper tray is slideable and pivotable relative to a base tray in order to allow access to fibre managed by the base tray. There are fixing means for fixing an optical element.

US 6,504,986 B1 discloses an optical fibre assembly with a panel at an opening of the lower bottom face wherein the connector retaining means or the connector itself may protrude through the opening and the adjacent panel.

The object of the proposed organizer is to provide an improved organizer with a reduced design. One basic object of the invention is to provide a fibre organizer with fixing means for an optical element that allow the arrangement of the element in such a position that a large element can be fixed to the fibre organizer without protruding too much above the upper face or below the bottom of the fibre organizer. This is advantageous if the element which may be embodied as an optical coupler, for example an optical splitter or an optical wave-length division multiplexer or an optical wave-length division de-multiplexer. This elements may have a relative large height which may cause problems by arranging this elements on the fibre organizer without increasing the height of the fibre organizer. A further object of the invention is to provide a stack of several fibre organizers, whereby the height of the stack is small.

The object of the invention is achieved by the fibre organizer according to claim 1 and by the stack according to claim 13.

Further embodiments of the fibre organizer and of the stack are described in dependent claims.

The proposed fibre organizer and the proposed stack of fibre organizers have the advantage that also elements are fixed to the fibre organizer which have a relatively great height.

The object of the invention is attained by a fibre organizer according to claim 1. This means that the element is arranged in a lower position in the fibre organizer compared to the state of the art.

The fixing means can be arranged in front of a plate of the organizer and designed such that the element is fixed at a front side beside the plate of the organizer. A comparative embodiment has the advantage that it is not necessary to provide a recess or an opening in the organizer to hold the element in the advantageous low position.

The fixing means itself protrudes a plane of a lower bottom face of the organizer or the fixing means are designed such that the element protrudes the plane of the lower bottom face of the organizer.

This means that at least a part of the fixing means or at least a part of the element is arranged below the lower bottom face of the organizer. This reduces the protrusion of the fixing means and/or of the element above the plane of the upper face of the organizer.

In a further embodiment, the fixing means themselves are designed such that the fixing means protrude a plane of the upper face of the organizer or the fixing means are designed such that the element protrudes with an upper part the plane of the upper height of the organizer. This means that the upper part of the fixing means and/or the upper part of the element protrude the upper face of the organizer which reduces the protrusion of the fixing means and/or of the element below the lower bottom face of the organizer.

The object of the invention is attained by a stack of two organizers as defined in claim 12.

Furthermore, the object of the invention is attained by a stack of at least two organizers which are arranged on top of each other, whereby the further organizer comprises a second recess at a lower face of the bottom to receive an upper part of an element and/or an upper part of fixing means of an organizer which is arranged below the further organizer.

Furthermore, the object of the invention is attained by a combination of organizers which comprise a third receiving area and a second recess.

The proposed stacks have the advantage that also an element and/or fixing means protrude above a height of the organizer and/or protrude below a bottom of the organizer; an arrangement of the organizers on top of each other is possible with a small height. The small height of the stack is attained by receiving the protruding parts of the element and/or the protruding parts of the fixing means in a third receiving area and/or a second recess.

In a further embodiment, the further organizer and the organizer are embodied with the same shape, whereby the further organizer is arranged at a predetermined distance lateral relative to the organizer preferably in a direction perpendicular to a longitudinal axis of the element of the organizer. Thus, it is possible to staple a lot of organizers on top of each other.

In a further embodiment, the third receiving area and the recess are arranged opposite to the receiving area for the element.

In a further embodiment, the fibre organizer comprises at least a flexible arm as fixing means. The flexible arm may be embodied as snap fit. The flexible arm allows for a safe and easy fixing of the element which has a rectangular cross-section.

In a further embodiment, the fixing means are at least partly embodied as a face of the organizer.

The organizer comprises a plate, the plate having a recess which forms an area for at least partially receiving the element. For this reason, it is possible to reduce the height of the organizer by arranging the element in the recess. Furthermore, the recess may comprise faces for supporting the lateral faces of the element. By means of these features, it is possible to provide a safe and secure fixing of the element on the fibre organizer.

In a further embodiment, the organizer comprises an opening whereby the opening disposes an area for receiving the element partly projecting through the opening. Thus, it is possible to arrange the element having a small height. In a further embodiment, the fibre organizer comprises guiding elements for guiding a fibre in a minimum radius, the guiding elements being located at opposite sides of the area for receiving the element. The guiding elements may be embodied as a wall of a recess. For this reason, microbends are avoided.

In a further embodiment, the flexible arm has two holding faces whereby the two holding faces define an inclined face which is disposed for holding an upper edge of the element. Thus, a safe and easy fixing of the element is achieved.

In a further embodiment, the organizer comprises a free area adjacent to the receiving area, the free area being configured to receive a lower edge of an element of a further fibre organizer which is arranged on top of the organizer. Thus, it is possible to staple several organizers with small height.

In a further embodiment, the fixing means are embodied to hold the element at all lateral faces of the element. Thus, a secure fixing of the element is achieved.

In a further embodiment the organizer comprises a second recess at the bottom to receive an upper edge of an organizer which is arranged below the organizer. Therefore a staple of organisers with a small height can be attained.

In a further embodiment at opposite ends of the recess pairs of faces are disposed, whereby the faces of one pair form a shape of a V-groove and are disposed for receiving lower lateral faces of the element. Theses features provide a secure holding of the element on the organizer.

Embodiments of the invention are described with reference to the Figures.
Figure 1 shows a part of a first embodiment of an organizer;
Figure 2 shows a cross-sectional view of the organizer of Figure 1;
Figure 3 shows a schematic view onto the recess;
Figure 4 shows a cross-sectional view through a middle axis of the recess;
Figure 5 shows a schematic partial perspective view of a ramp of the recess;
Figure 6 shows a second organizer;
Figure 7 shows the second organizer without the element;
Figure 8 shows a cross-sectional view of the second organizer;
Figure 9 shows a cross-sectional view of the second organizer without the element;
Figure 10 shows a staple of second organizers;
Figure 11 shows a perspective view of a fixing plate with organizers of Figure 4;
Figure 12 shows a section of the staple of organizers;
Figure 13 shows a further embodiment of a stack of organizers with elements with a circular cross-section;
Figure 14 shows a further embodiment of an organizer with fixing means at a front side of the organizer;
Figure 15 shows a stack of organizers of figure 14;
Figure 16 shows a further embodiment of a stack of elements; and
Figure 17 shows a further embodiment of a stack of organizers.

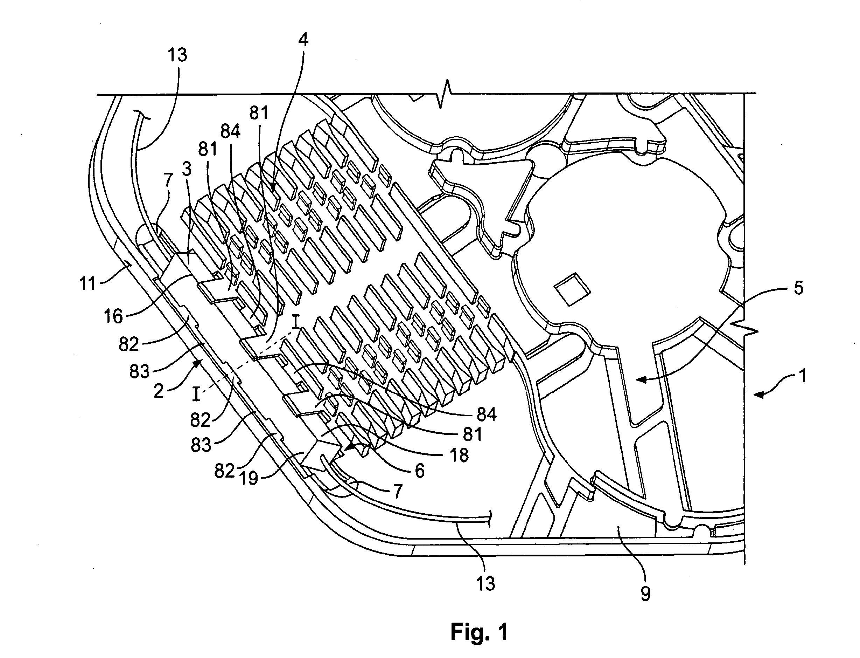

Figure 1 shows a perspective view of a part of an optical organizer 1. The optical organizer is configured as a tray in the shape of a plate in the shown embodiment, the plate comprising a receiving area 2 for receiving and fixing an optical element 3 which may be embodied as an optical splitter. The optical splitter is provided for dividing an optical path of an optical fibre in different optical paths for example in different optical fibres. The receiving area 2 is arranged in parallel to a front straight side 11 of the plate. The organizer 1 comprises a further area 4 for holding an fixing optical splices of optical fibres. Furthermore, the organizer 1 comprising guiding means 5 for guiding optical fibres.

The element 3 has a rectangular cross-section. The shown embodiment of the element 3 has a square cross-section with four lateral faces. The element 3 is fixed to the organizer 1 in a position with an upper edge 16 up from a plane of the organizer 1. This means that no lateral face of the element is arranged in parallel to the plane of the plate 9. Instead of this, lower two lateral faces are arranged at a predetermined angle for example between 20° and 80° relative to the plane of the plate. Furthermore, a recess 6 is disposed in the receiving area 2 of the plate 9 for at least partly receiving the element 3. The recess 6 is arranged in parallel to the front side 11 and may have at least the same length as the element 3. Thus, the upper edge 16 of the element 3 does not protrude so high above the plane of the organizer 1. The recess 6 comprises ramps 7 at opposite ends, the ramps 7 guiding up from the bottom of the recess 6 to an upper face of the plate 9 of the organizer 1. In the shown embodiment, the organizer 1 comprises fixing means 81, 82, 83, 84. The fixing means are arranged in pairs at opposite sides of the element 3. Some of the fixing means are configured as flexible arms. Some of the fixing means are embodied as snap fits and some of the fixing means are embodied as faces.

The element 3 is connected to fibres 13 at opposite ends, whereby the fibres 13 are guided up to a surface of the plate 9 from the recess 6 via the ramp 7.

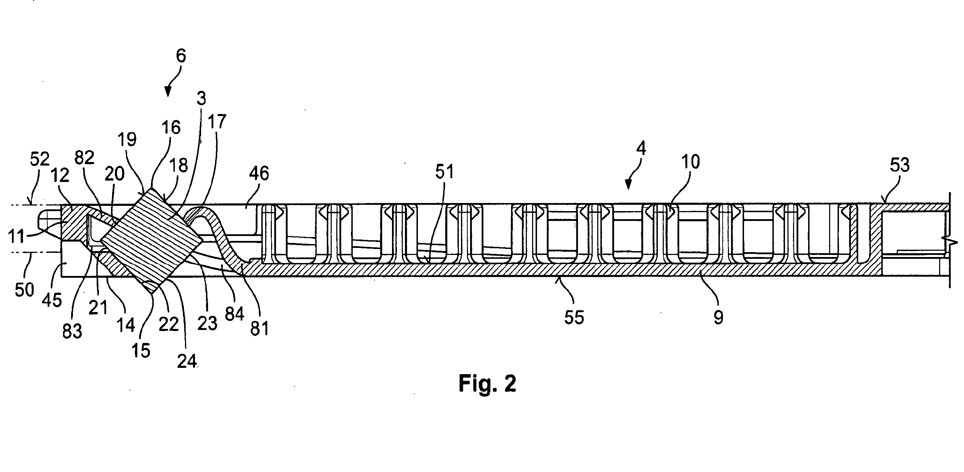

Figure 2 shows a cross-section I-I of the organizer 1 and the element 3 of Figure 1. The organizer 1 is basically configured as a plate 9 with further fixing means 10 for fixing optical splices on the organizer 1. The recess 6 is adjacent to the front side 11. The plate 9 of the organizer 1 is surrounded by a rim 12.

In the shown embodiment, the recess 6 is formed to an opening 14 which opens the plate 9 of the organizer 1. A lower edge 15 of the element 3 protrudes from a lower face of the plate 9 through the opening 14. An upper edge 16 protrudes over the rim 12.

A first fixing means 81 is embodied as a snap fit which is pressed against a lateral surface 18 of the element 3 by means of a holding face 17. The snap fit has the shape of a hook and is flexible and protrudes from the plate 9 opposite to the front side 11. The first lateral surface 18 is oriented in upper direction away from the further area 4. Adjacent to the first lateral surface 18 at an opposite side referring to the upper edge 16, a second lateral surface 19 is arranged. The second lateral surface 19 is fixed by a second fixing means 82 which is embodied as a flexible arm. The second fixing means 82 protrudes from an upper end section of the rim 12 and is directed downwards to the plate 9. The second fixing means 82 abuts the second lateral surface 19 with a second holding face 20.

A third fixing means 83 is arranged which is configured as a flexible arm protruding from a middle section of the rim 12. The third fixing means is pressed against a third lateral surface 22 of the element 3 by means of a third holding face 21. The third lateral surface 22 is arranged opposite to the first lateral surface 18. The third fixing means 83 supports the third lateral surface 22.

A fourth fixing means 84 is arranged which protrudes from the plate 9 at the same side as the first fixing means 81 and which abuts a fourth lateral surface 24 with a fourth holding face 23. The fourth lateral surface 24 is disposed opposite to the second lateral surface 19. The fourth fixing means 84 is also embodied as a flexible arm which supports the fourth lateral surface 24. The element 3 is held by the first and the second fixing means 81, 82 from an upper side and the third and the fourth fixing means 83, 84 from a lower side.

The first and the second fixing means 81, 82 are arranged at opposite sides and at the same length of the element 3. The third and the fourth fixing means 83, 84 are arranged at opposite sides of the element 3, as well, and at the same length of the element 3. However, the first and the second fixing means are located at a distance to each other along the length of the element 3.

The embodiment shown in Figure 1 comprises three pairs of first and second fixing means 81, 82, whereby two pairs of third and fourth fixing means 83, 84 are arranged between two pairs of first and second fixing means 81, 82.

However, depending on the used embodiment, different combinations of the first, second, third and fourth fixing means may be used. Also it might be sufficient in some embodiments to use only recesses 6 without openings 19.

The plate 9 comprises at an upper side a bottom face 51 which defines a plane 50. In the state of the art, the element 3 is arranged on the plate 9 at the level of the plane 50. As can be seen, the element 3 and/or fixing means are arranged below the plane 50. This reduces the distance which the element and/or the fixing means protrude above a second plane 52 which defines the level of the upper face 53 of the organizer. The plate 9 provides at a lower side a lower bottom face 55. The element 3 protrudes over the lower bottom face 55 of the plate 9.

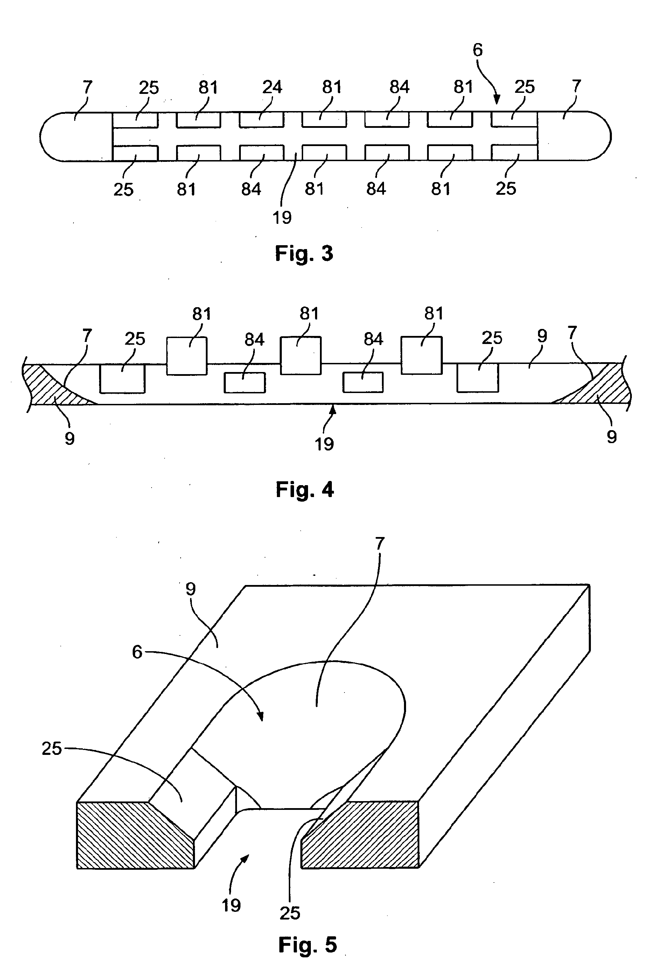

Figure 3 shows a schematic view on the opening 6 which comprises two pairs of receiving faces 25 adjacently to opposite ends of the opening 19. A pair of receiving faces 25 has the shape of a V groove which might be open in the bottom. The angle of the V corresponds to the angle of the lateral faces at the lower edge 16. The ramps 7 adjoin the receiving faces 25. In a mounted position, the third and fourth lateral face 22, 24 lie on the respective receiving faces 25.
Figure 4 shows a cross-section through the middle axis of the recess 6.
Figure 5 shows a perspective view of the receiving faces 25 and the adjoining ramp 7.

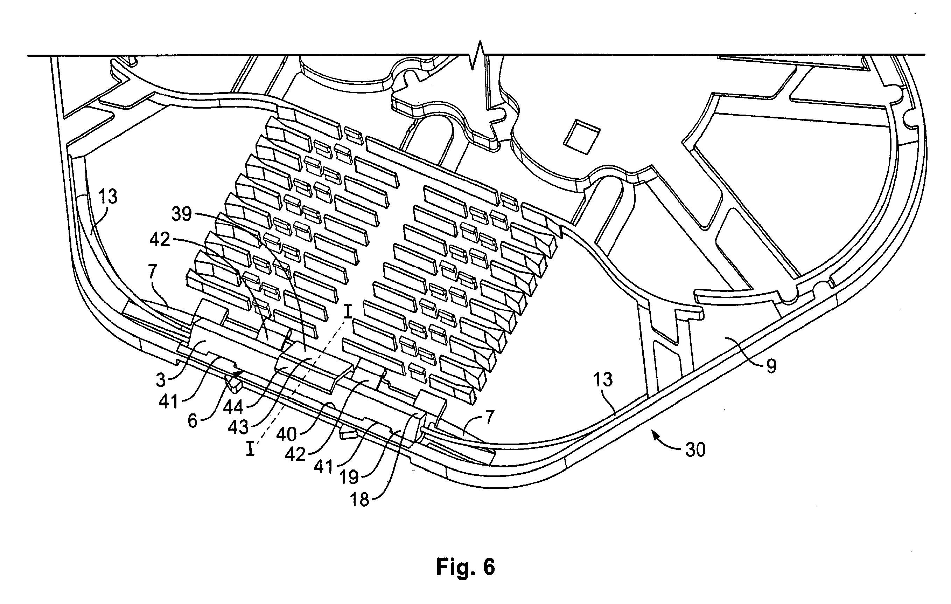

Figure 6 shows a second organizer 30 which is embodied basically as the first organizer 1, but which differs from the embodiment of Figure 1 by different fixing means for fixing the element 3 in the receiving area 2. The second organizer 30 also comprises a recess 6 which is formed to an opening 19 and the recess 6 has two ramps 7 at opposite sides. In the recess 6, the element 3 is disposed. The main difference between the second organizer 30 and the first organizer 1 are the further fixing means which are arranged for fixing the element 3. The element 3 abuts a holding surface 40 with the third lateral surface 22. At an upper end of the holding surface 40, two lips 41 are arranged which grip the second lateral surface 19. The lips 41 may be flexible. The holding surface 40 is adjacent to the front side 11.

Opposite to the holding surface 40, two clips 42 protrude from the plate 9 and support the fourth lateral surface 24. The clips 42 are flexible. Between the outer two clips 42, a snap fit 43 protrudes from the plate 9. The snap fit 43 has a first section 39 which rests on the first lateral surface 18 of the element 3. The first section 39 ends in a hook 44 which rests on the second lateral surface 19 with an inner face.

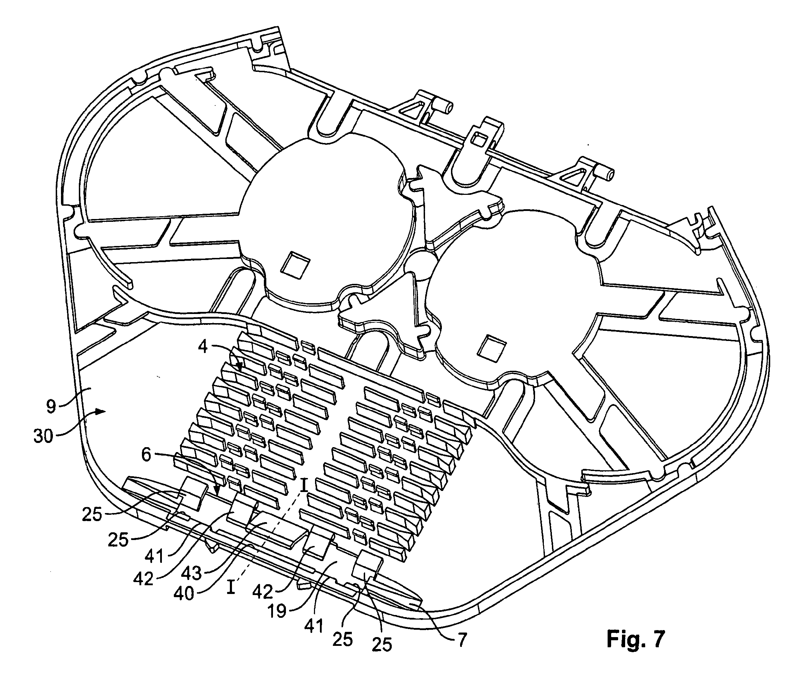

Figure 7 shows the second organizer without the element 3..

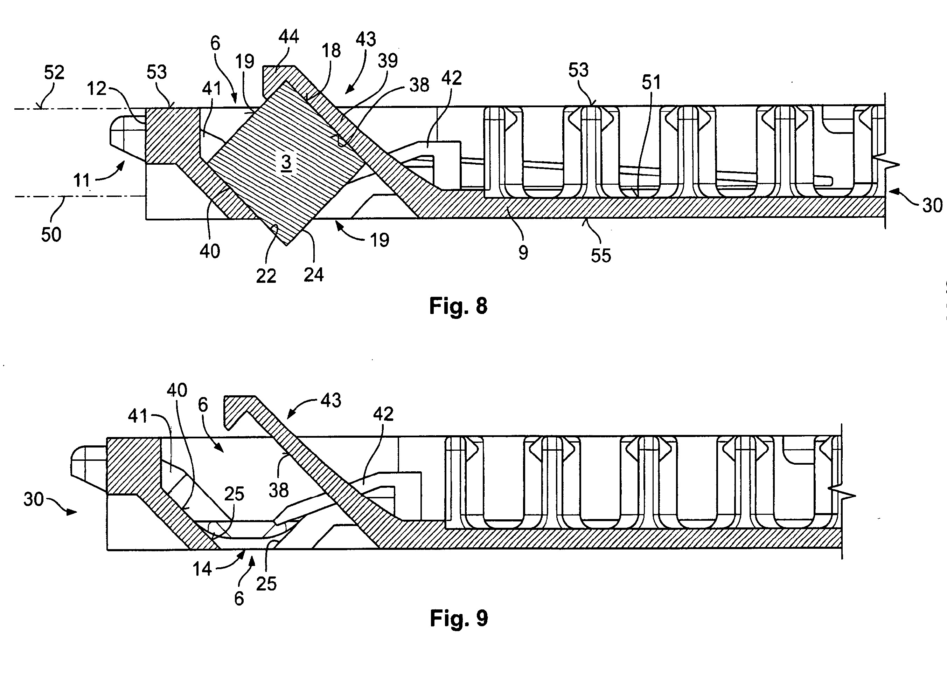

Figure 8 shows a cross-sectional view I - I of Figure 6. The element 3 protrudes over the lower bottom face 55 of the plate 9.
Figure 9 shows a cross-sectional view I - I of Figure 7. In Figure 9, the recess 6 which is an opening 14 can clearly be seen. The holding surface 40 and the inner face 38 of the snap fit 43 are arranged in parallel. Also, the holding surface of the lips 41 is arranged in parallel to the holding surface of the opposed receiving faces 25. The four lateral surface 18, 19, 22, 24 are fixed in a stable and elastic manner, as can be seen in Figure 8.

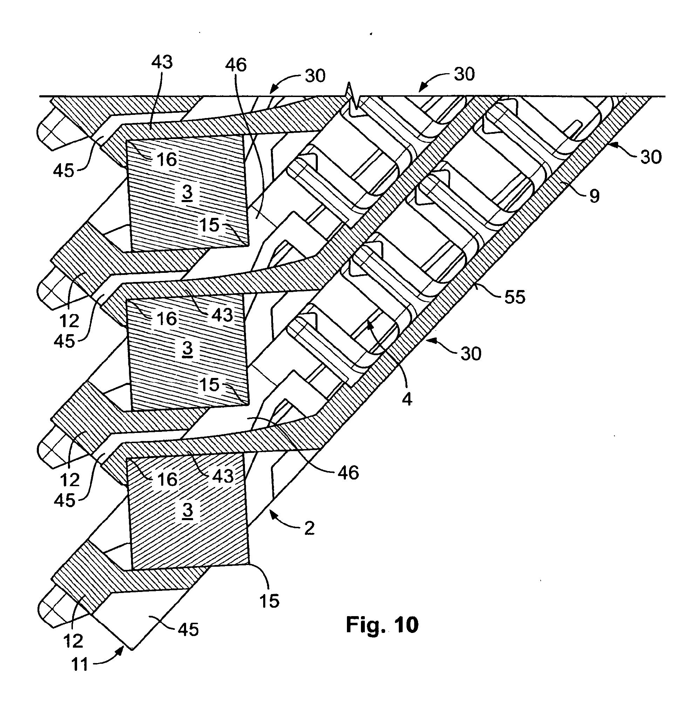

The second organizers 30 can be stapled as shown in Figure 10. The rim 12 comprises a second recess 45 at a lower side of the front side 11, the second recess 45 being provided for receiving an upper end of a snap fit 43 of a further second organizer 30 which is disposed on the second organizer 30. Furthermore, the second organizer 30 comprises a third receiving area 46 which is arranged between the receiving area 2 and the further area 4. The third receiving area 46 is provided to receiving a lower edge 15 of an element 3 of a further second organizer 30 which is arranged on the second organizer 30. By using these features, it is possible to arrange several second organizers 30 as shown in Figure 10. This arrangement allows for the reduction of the height of the stapled second organizers 30. Also, the height of the element 3 may be larger than the height of the organizer 1.

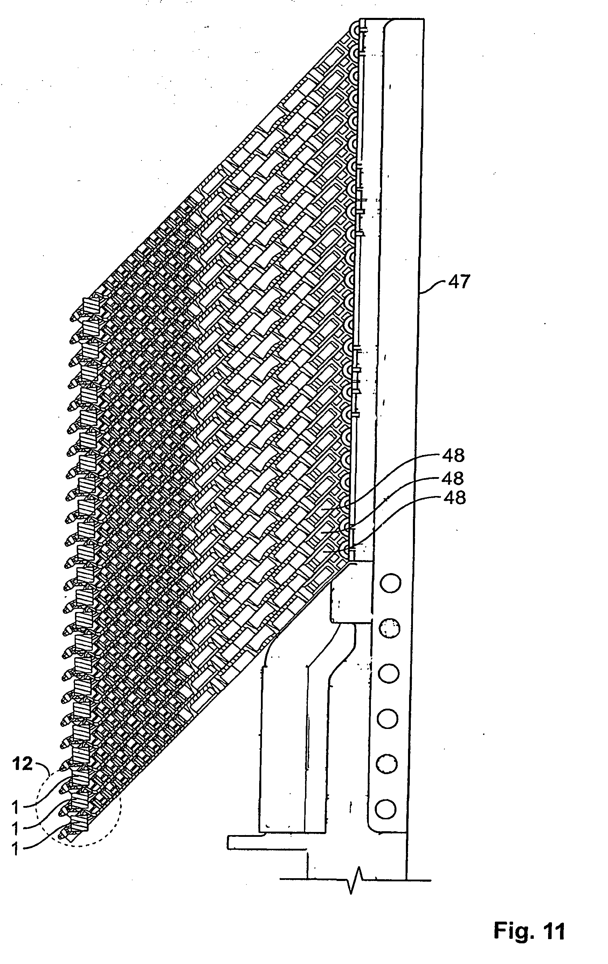

Figure 11 shows an arrangement with a support plate 47 which is part of a system for optical organizers 1. Several organizers 1 are rotatably fixed to the fixing plate 47 by hinge means 48. The organizers 1 are arranged in parallel to each other and at a predetermined angle to the plane of the support plate 47. In this embodiment, the front sides 11 of the organizers 1 are disposed in the same distance as shown in Figure 10 which allows a very close arrangement of the stapled organizers 1.

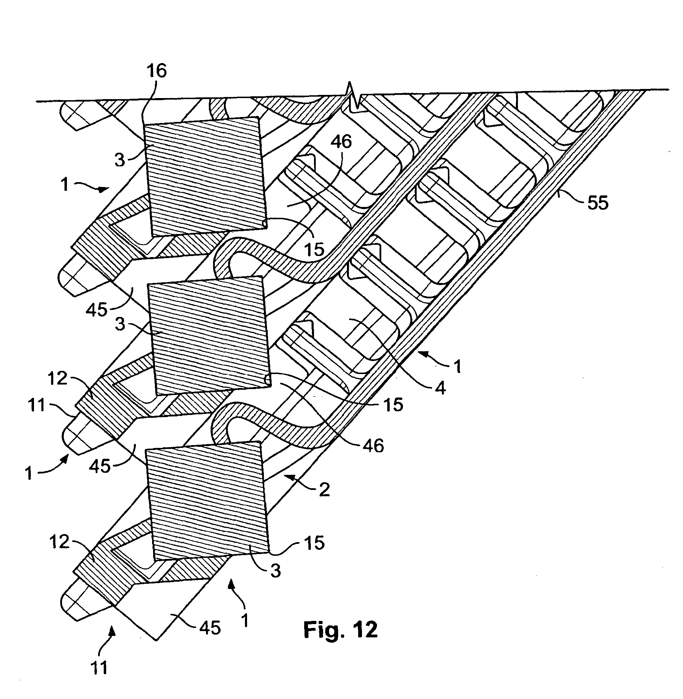

Figure 12 shows a detailed view of the staple arrangement of organizers 1 of Fig. 11. Also, the organizer 1 has a second recess 45 at a lower side of the front side 11 and a third receiving area 46 adjacently to the receiving area 2.

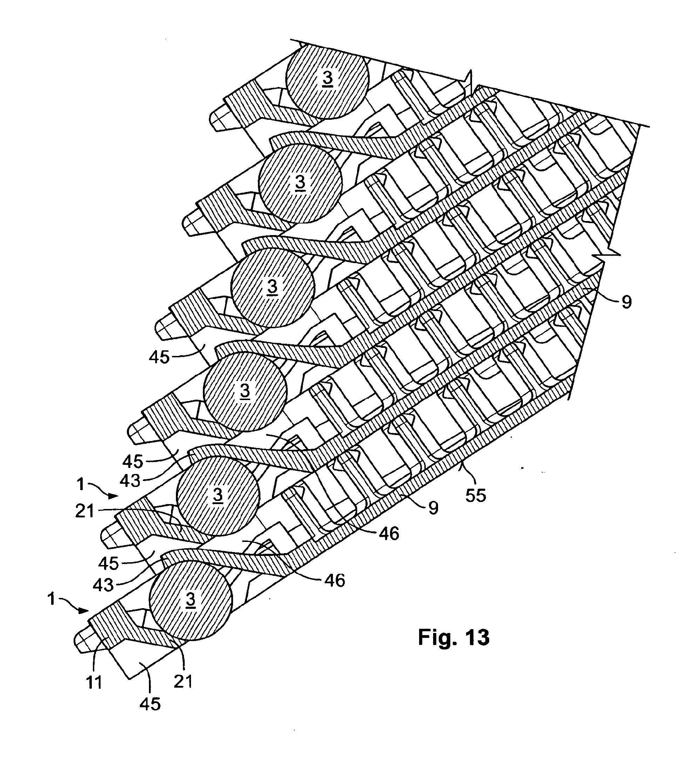

Figure 13 shows a stack of organizers 1 which have the same design as the organizers of figure 10, whereby instead of the embodiment of figure 10, the elements 3 have a circular cross-section. Therefore, the snap fits 43 do not comprise an edge region at the end, but comprise a section with preferably a part-circular inner face which lies on an upper side of the circular element 3. In this embodiment, the circular element 3 does not protrude in a second recess 45 of a further organizer 1 which is arranged on top of the organizer 1. Only the snap fit 43 as a fixing means protrudes in the second recess 45. However, depending on the diameter of the circular element 3, also an upper part of the circular element 3 may protrude in the second recess 45 of a further organizer as it is shown for the embodiment of figure 10. A lower part of the circular element 3 of figure 13 protrudes in the third receiving area 46 of an organizer 1 which is arranged below the circular element. Depending on the used embodiment, the circular element 3 may not protrude in the third receiving area 46 and/or fixing means, e. g. embodied as flexible arms or snap fits, may protrude in a third receiving area 46 of an organizer 1 arranged below.

In the embodiments which are described in the figures 1 to 12, only elements 3 with rectangular cross-sections are shown. However, depending on the embodiment, also in the embodiments of figures 1 to 12, the elements 3 may have a circular cross-section or any other shape of cross-section. Depending on the cross-section, the fixing means are adapted to this shape of the cross-section to be able to fix the element 3 at the organizer.

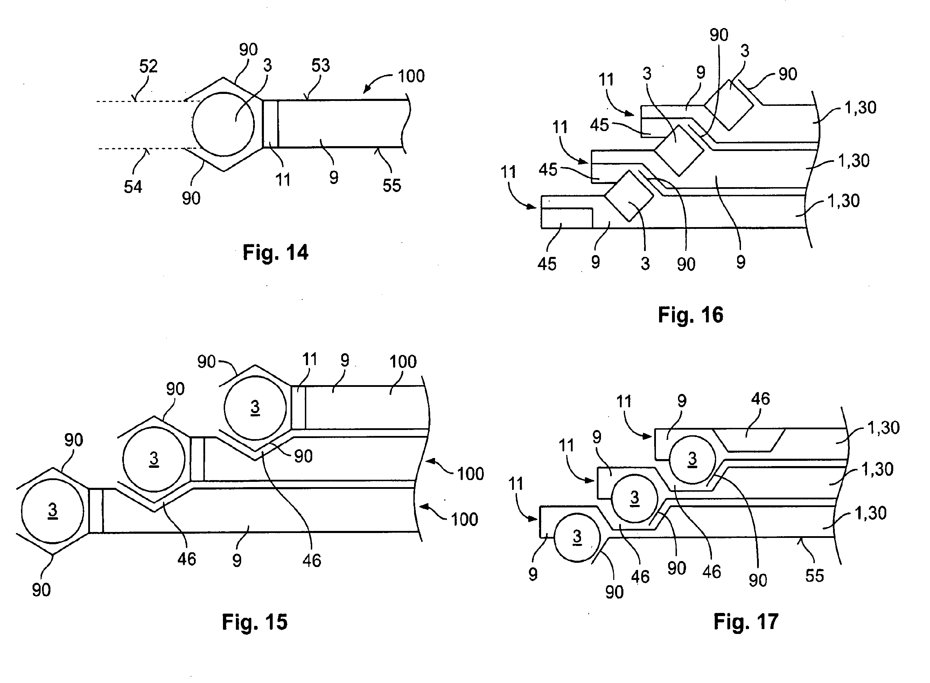

Figure 14 shows an embodiment of further organizer 100 with further fixing means 90 at a front side 11 of the organizer. The further fixing means 90 define a receiving area for the element 3. Therefore, it is not necessary to provide a recess or an opening in the plate 9 to arrange the element 3 at a preferred level referring to the organizer 1. Depending on the used embodiment, the further fixing means 90 may be embodied in such a way that the element 3 protrudes the second plane 52 of an upper face 53 and/or a further plane 54 of a lower bottom face 55 of the organizer 1. In the shown embodiment, the fixing means and/or the element 3 protrudes the second plane 52 of the upper face 53 of the organizer 1 and the further plane 54 of the lower bottom face 55 of the organizer 1.

As can be seen in figure 15, the further organizers 100 can also be arranged in a stack, whereby a lower part of the fixing means and/or of the element 3 may be received in a third receiving area 46 of the lower further organizer 100. As the fixing means and/or the element 3 is positioned in front of the plate 9 of the further organizer 100, it is not necessary to provide a second recess at the bottom of the further organizer 100 for arranging several further organizers 100 as a stack.

Figure 16 shows a stack of organizers 1,30 with elements 3 and/or further fixing means 90 which protrude only the second plane of the upper face 53 of the respective organizer 1,30. Therefore, it is sufficient to provide at the organizers 1,30 a second recess 45 at the bottom to stack the organizers 1,30.

In a further embodiment which is shown in figure 17, the fixing means 90 and/or the element 3 protrudes only the further plane 54 of the lower bottom face 55 of the respective organizer 1. Therefore, it is not necessary to provide a second recess but it is sufficient to provide a third receiving area 46 to receive a lower part of the element 3 and/or a lower part of the fixing means to stack the organizers with a small height.

The further fixing means 90 may be embodied in any shape as explained for the fixing means of the figures 1 to 13.

## Claims

1. Fibre organizer (1, 30, 100) with fixing means (81, 82, 83, 84, 41, 42, 43, 25) for fixing an optical element (3) and with means (5) for guiding an optical fibre (13) on the organizer (1, 30),
wherein the fibre organizer (1,30) comprises a plate (9) that comprises an upper bottom face (51) which defines a plane (50),
wherein the plate (9) provides at a lower side a lower bottom face (55) defining a further plane,
wherein the plate (9) has a recess (6) which forms a receiving area (2) for the element (3),
wherein the fixing means (81, 82, 83, 84, 41, 42, 43, 25) are embodied to fix the element(3) in a position in which the element (3) protrudes the plane (50) of the upper bottom face (51) of the organizer (1,30, 100) and wherein the fixing means (81, 82, 83, 84, 41, 42, 43, 25) and/or the element (3) protrude the further plane of the lower bottom face (55) of the organizer (1, 30, 100).

2. Organizer of claim 1, wherein the fixing means (81, 82, 83, 84, 41, 42, 43, 25) are embodied to fix the element(3) in a position in which the element (3) and/or the fixing means (81, 82, 83, 84, 41, 42, 43, 25) at least protrude a second plane (52) of an upper face (53) of the organizer (1,30,100).

3. Fibre organizer of claim 1 or 2, wherein the fixing means fix the element (3) in front of the plate (9) of the organizer (100).

4. Fibre organizer (1, 30) of one of the claims 1 to 3,
wherein the element (3) has a rectangular cross section wherein the fixing means (81, 82, 83, 84, 41, 42, 43, 25) are embodied to fix the element (3) in an inclined position with a lateral edge (16) up.

5. Organizer according to one of the claims 1 to 4, wherein the fixing means is at least partly a flexible arm (81, 82, 83, 84, 43) and/or wherein the fixing means is at least partly a face (25) of the organizer (1, 30, 100).

6. Organizer according to one of the claims 1 to 5,
wherein the recess (6) is an opening (19), wherein the opening (19) disposes the receiving area (2) for the element (3) partly projecting through the opening (19).

7. Organizer according to one of the claims 1 or 6, wherein the organizer (1, 30) has guiding elements (7) at opposite sides of the receiving area (2) for guiding a fibre (13) in a minimum radius from the element (3),
wherein the guiding elements are embodied as a wall of a ramp (7).

8. Organizer according to one of the claims 5 to 7, wherein the flexible arm (43) has two holding faces, wherein the two holding faces define an inclined face (38) which is disposed for holding an upper edge (16) of the element (3).

9. Organizer according to one of the claims 1 to 8, wherein the organizer comprises at an upper side adjacent to a receiving area (2) for the element (3) a third receiving area (46), which is embodied to receive a lower part (15) of an element (3) of a further organizer (1, 30, 100) which is arranged on the organiser (1, 30).

10. Organizer according to one of the claims 1 to 9, wherein the organizer (1, 30) comprises a second recess (45) at the bottom to receive an upper part (16) of an element (3) of a further organizer (1, 30) which is arranged below the organizer (1, 30).

11. Organizer according to one of the claims 1 to 10, wherein at opposite ends of the recess (6) pairs of faces (25) are disposed, wherein the faces (25) of one pair form a shape for receiving at least one lower face (22, 24) of the element (3).

12. A stack of a fibre organizer according to any one of the preceding claims and a further fibre organizer (1,30,100), wherein the fibre organizer is arranged on top of the further fibre organizer , wherein the further organizer has adjacent to a receiving area (2) for an element (3) a further receiving area (46), which is embodied to receive a lower part (15) of an element (3) and/or a lower part of fixing means of the organizer (1, 30) which is arranged on top of the organiser (1, 30, 100).

13. Stack of claim 12, wherein the organizer (1,30,100) and the further organizer (1,30,100) are embodied with the same shape, and wherein the organizer (1,30,100) is arranged at a predetermined lateral distance relative to the further organizer (1,30,100) and wherein preferably the further organizer (1,30,100) is arranged at the predetermined distance lateral relative to the organizer in a direction perpendicular to a longitudinal axis of the element (3) of the organizer(1,30,100).

14. Stack of claim 12 or 13, wherein the organizer (1, 30) comprises a second recess (45) at a lower bottom face (55) to receive an upper part (16) of an element (3) and/or an upper part of the fixing means of the further organizer (1, 30, 100).

## Patentansprüche

1. Faserorganisator (1, 30, 100) mit Befestigungsmitteln (81, 82, 83, 84, 41, 42, 43, 25) zum Befestigen eines optischen Elements (3) und mit einem Mittel (5) zum Führen eines Lichtwellenleiters (13) auf dem Organisator (1, 30),
wobei der Faserorganisator (1, 30) eine Platte (9) umfasst, die eine obere Bodenfläche (51) umfasst, die eine Ebene (50) definiert,
wobei die Platte (9) an einer unteren Seite eine untere Bodenfläche (55) bereitstellt, die eine weitere Ebene definiert,
wobei die Platte (9) eine Aussparung (6) hat, die einen Aufnahmebereich (2) für das Element (3) bildet,
wobei die Befestigungsmittel (81, 82, 83, 84, 41, 42, 43, 25) so umgesetzt sind, dass sie das Element (3) in einer Position befestigen, in der das Element (3) über die Ebene (50) der oberen Bodenfläche (51) des Organisators (1, 30, 100) hinausragt und wobei die Befestigungsmittel (81, 82, 83, 84, 41, 42, 43, 25) und/oder das Element (3) über die weitere Ebene der unteren Bodenfläche (55) des Organisators (1, 30, 100) hinausragen.

2. Organisator nach Anspruch 1, wobei die Befestigungsmittel (81, 82, 83, 84, 41, 42, 43, 25) so umgesetzt sind, dass sie das Element (3) in einer Position befestigen, in der das Element (3) und/oder die Befestigungsmittel (81, 82, 83, 84, 41, 42, 43, 25) wenigstens eine zweite Ebene (52) einer oberen Fläche (53) des Organisators (1, 30, 100) überragen.

3. Faserorganisator nach Anspruch 1 oder 2, wobei die Befestigungsmittel das Element (3) vor der Platte (9) des Organisators (100) befestigen.

4. Faserorganisator (1, 30) nach einem der Ansprüche 1 bis 3, wobei das Element (3) einen rechteckigen Querschnitt hat, wobei die Befestigungsmittel (81, 82, 83, 84, 41, 42, 43, 25) so umgesetzt sind, dass sie das Element (3) in einer geneigten Position mit einer seitlichen Kante (16) nach oben befestigen.

5. Organisator nach einem der Ansprüche 1 bis 4, wobei das Befestigungsmittel wenigstens teilweise ein flexibler Arm (81, 82, 83, 84, 43) ist und/oder wobei das Befestigungsmittel wenigstens teilweise eine Fläche (25) des Organisators (1, 30, 100) ist.

6. Organisator nach einem der Ansprüche 1 bis 5, wobei die Aussparung (6) eine Öffnung (19) ist, wobei die Öffnung (19) den Aufnahmebereich (2) für das Element (3) anordnet, das teilweise durch die Öffnung (19) vorspringt.

7. Organisator nach einem der Ansprüche 1 oder 6, wobei der Organisator (1, 30) Führungselemente (7) an entgegengesetzten Seiten des Aufnahmebereichs (2) hat, um eine Faser (13) in einem minimalen Radius von dem Element (3) zu führen,
wobei die Führungselemente als eine Wand einer Rampe (7) umgesetzt sind.

8. Organisator nach einem der Ansprüche 5 bis 7, wobei der flexible Arm (43) zwei Halteflächen hat, wobei die zwei Halteflächen eine geneigte Fläche (38) definieren, die dafür angeordnet ist, eine obere Kante (16) des Elements (3) zu halten.

9. Organisator nach einem der Ansprüche 1 bis 8, wobei der Organisator an einer oberen Seite, angrenzend an einen Aufnahmebereich (2) für das Element (3), einen dritten Aufnahmebereich (46) umfasst, der so umgesetzt ist, dass er einen unteren Teil (15) eines Elements (3) eines weiteren Organisators (1, 30, 100), der auf dem Organisator (1, 30) angeordnet ist, aufnimmt.

10. Organisator nach einem der Ansprüche 1 bis 9, wobei der Organisator (1, 30) eine zweite Aussparung (45) an dem Boden umfasst, um einen oberen Teil (16) eines Elements (3) eines weiteren Organisators (1, 30), der unterhalb des Organisators (1, 30) angeordnet ist, aufzunehmen.

11. Organisator nach einem der Ansprüche 1 bis 10, wobei an entgegengesetzten Enden der Aussparung (6) Paare von Flächen (25) angeordnet sind, wobei die Flächen (25) eines Paares eine Form zum Aufnehmen wenigstens einer unteren Fläche (22, 24) des Elements (3) bilden.

12. Stapel aus einem Faserorganisator nach einem der vorhergehenden Ansprüche und einem weiteren Faserorganisator (1, 30, 100), wobei der Faserorganisator oben auf dem weiteren Faserorganisator angeordnet ist, wobei der weitere Organisator, angrenzend an einen Aufnahmebereich (2) für ein Element (3) einen weiteren Aufnahmebereich (46) hat, der so umgesetzt ist, dass er einen unteren Teil (15) eines Elements (3) und/oder einen unteren Teil von Befestigungsmitteln des Organisators (1, 30), der oben auf dem Organisator (1, 30, 100) angeordnet ist, aufnimmt.

13. Stapel nach Anspruch 12, wobei der Organisator (1, 30, 100) und der weitere Organisator (1, 30, 100) mit der gleichen Form umgesetzt sind und wobei der Organisator (1, 30, 100) mit einer vorbestimmten seitlichen Entfernung im Verhältnis zu dem weiteren Organisator (1, 30, 100) angeordnet ist und wobei vorzugsweise der weitere Organisator (1, 30, 100) in einer Richtung, senkrecht zu einer Längsachse des Elements (3) des Organisators (1, 30, 100), bei der vorbestimmten Entfernung seitlich im Verhältnis zu dem Organisator angeordnet ist.

14. Stapel nach Anspruch 12 oder 13, wobei der Organisator (1, 30) eine zweite Aussparung (45) an einer unteren Bodenfläche (55) umfasst, um einen oberen Teil (16) eines Elements (3) und/oder einen oberen Teil der Befestigungsmittel des weiteren Organisators (1, 30, 100) aufzunehmen.

## Revendications

1. Organiseur de fibres (1, 30, 100) comportant des moyens de fixation (81, 82, 83, 84, 41, 42, 43, 25) pour fixer un élément optique (3) et un moyen (5) pour guider une fibre optique (13) sur l'organiseur (1, 30) ;
dans lequel l'organiseur de fibres (1, 30) comprend une plaque (9) comprenant une face de fond supérieure (51) définissant un plan (50) ;
dans lequel la plaque (9) établit au niveau d'un côté inférieur une face de fond inférieure (55) définissant un plan additionnel ;
dans lequel la plaque (9) comporte un évidement (6) formant une zone de réception (2) de l'élément (3) ;
dans lequel les moyens de fixation (81, 82, 83, 84, 41, 42, 43, 25) sont configurés de sorte à fixer l'élément (3) dans une position dans laquelle l'élément (3) déborde du plan (50) de la face de fond supérieure (51) de l'organiseur (1, 30, 100), les moyens de fixation (81, 82, 83, 84, 41, 42, 43, 25) et/ou l'élément (3) débordant du plan additionnel de la face de fond inférieure (55) de l'organiseur (1, 30, 100).

2. Organiseur selon la revendication 1, dans lequel les moyens de fixation (81, 82, 83, 84, 41, 42, 43, 25) sont configurés de sorte à fixer l'élément (3) dans une position dans laquelle l'élément (3) et/ou les moyens de fixation (81, 82, 83, 84, 41, 42, 43, 25) débordent au moins d'un deuxième plan (52) d'une face supérieure (53) de l'organiseur (1, 30, 100).

3. Organiseur de fibres selon les revendications 1 ou 2, dans lequel les moyens de fixation fixent l'élément (3) devant la plaque (9) de l'organiseur (100).

4. Organiseur de fibres (1, 30) selon l'une des revendications 1 à 3, dans lequel l'élément (3) a une section transversale rectangulaire, les moyens de fixation (81, 82, 83, 84, 41, 42, 43, 25) étant configurés de sore à fixer l'élément (3) dans une position inclinée, un bord latéral (16) étant orienté vers le haut.

5. Organiseur selon l'une des revendications 1 à 4, dans lequel le moyen de fixation est un bras au moins en partie flexible (81, 82, 83, 84, 43), et/ou dans lequel le moyen de fixation est au moins en partie une face (25) de l'organiseur (1, 30, 100).

6. Organiseur selon l'une des revendications 1 à 5, dans lequel l'évidement (6) est une ouverture (19), l'ouverture (19) établissant la zone de réception (2) de l'élément (3), débordant en partie à travers l'ouverture (19).

7. Organiseur selon l'une des revendications 1 ou 6, dans lequel l'organiseur (1, 30) comporte des éléments de guidage (7) au niveau de côtés opposés de la zone de réception (2), pour guider une fibre (13) dans le cadre d'un rayon minimal par rapport à l'élément (3), les éléments de guidage étant configurés sous forme d'une paroi d'une rampe (7).

8. Organiseur selon l'une des revendications 5 à 7, dans lequel le bras flexible (43) comporte deux faces de retenue, les deux faces de retenue définissant une face inclinée (38) agencée de sorte à retenir un bord supérieur (16) de l'élément (3).

9. Organiseur selon l'une des revendications 1 à 8, dans lequel l'organiseur comprend au niveau d'un côté supérieur, près d'une zone de réception (2) de l'élément (3), une troisième zone de réception (46), configurée de sorte à recevoir une partie inférieure (15) d'un élément (3) d'un organiseur additionnel (1, 30, 100) agencé sur l'organiseur (1, 30).

10. Organiseur selon l'une des revendications 1 à 9, dans lequel l'organiseur (1, 30) comprend un deuxième évidement (45) au niveau du fond, pour recevoir une partie supérieure (16) d'un élément (3) d'un organiseur additionnel (1, 30) agencé au-dessous de l'organiseur (1, 30).

11. Organiseur selon l'une des revendications 1 à 10, dans lequel des paires de faces (25) sont agencées au niveau des extrémités opposées de l'évidement (6), les faces (25) d'une paire établissant une forme pour recevoir au moins une face inférieure (22, 24) de l'élément (3).

12. Empilement d'un organiseur de fibres selon l'une quelconque des revendications précédentes et d'un organiseur de fibres additionnel (1, 30, 100), dans lequel l'organiseur de fibres est agencé en haut de l'organiseur de fibres additionnel, l'organiseur additionnel comportant, près d'une zone de réception (2) d'un élément (3), une zone de réception additionnelle (46), configurée de sorte à recevoir une partie inférieure (15) d'un élément (3), et/ou une partie inférieure des moyens de fixation de l'organiseur (1, 30) agencé en haut de l'organiseur (1,30, 100).

13. Empilement selon la revendication 12, dans lequel l'organiseur (1, 30, 100) et l'organiseur additionnel (1, 30, 100) ont la même forme, l'organiseur (1, 30, 100) étant agencé à une distance latérale prédéterminée de l'organiseur additionnel (1, 30, 100), l'organiseur additionnel (1, 30, 100) étant de préférence agencé à la distance prédéterminée, latéralement par rapport à l'organiseur, dans une direction perpendiculaire à un axe longitudinal de l'élément (3) de l'organiseur (1, 30, 100).

14. Empilement selon les revendications 12 ou 13, dans lequel l'organiseur (1, 30) comprend un deuxième évidement (45) au niveau d'une face de fond inférieure (55) pour recevoir une partie supérieure (16) d'un élément (3) et/ou une partie supérieure des moyens de fixation de l'organiseur additionnel (1, 30, 100).
